# EUROPEAN PATENT APPLICATION

(11) **EP 2 562 029 A2**
(43) Date of publication of application: **27.02.2013**
(21) Application number: 12179375.6
(22) Date of filing: 06.08.2012
(51) Int. Cl.: B60L 11/18

(54) **Power supply plug locking device**

(30) Priority: 24.08.2011 JP 2011182806
(71) Applicant: KABUSHIKI KAISHA TOKAI RIKA DENKI SEISAKUSHO, Niwa-gun, Aichi 480-0195 (JP)
(72) Inventor: Kurumizawa, Naoto, Niwa-gun, Aichi 480-0195 (JP); Hirashita, Takahiro, Niwa-gun, Aichi 480-0195 (JP); Kahara, Keiji, Niwa-gun, Aichi 480-0195 (JP); Katagiri, Toshiharu, Niwa-gun, Aichi 480-0195 (JP)
(74) Representative: TBK

(57) **Abstract**

A power supplying plug locking device (27) prevents unauthorized removal of a power supplying plug (9) from an inlet (14) in a state in which an operation arm (20) of the power supplying plug is engaged with a lock member (47) of the inlet. The power supplying plug locking device includes a rotatable key cylinder (41) and a link member (39) that cooperates with the rotation of the key cylinder to switch the lock member between a lock state, which restricts movement of the lock member, and an unlock state, which permits movement of the lock member.

## Description

The present invention relates to a power supplying plug locking device that locks a power supplying plug.

Vehicles that emit less carbon dioxide such as hybrid vehicle and electric vehicles have become popular. Electric motors generate drive force that drive such vehicles (refer to Japanese Laid-Open Patent Publication No. 9-161898).

When such a vehicle is driven, the state of charge of a battery that powers the electric motor becomes low. Thus, the driver connects a power supplying plug to the vehicle and charges the battery. The battery charging takes a long time. Thus, the driver may leave the vehicle unattended. Accordingly, the vehicle may be provided with a power supplying plug locking device that prevents a person from removing the power supplying plug in an unauthorized manner.

The present invention is directed to provide a power supplying plug locking device that can be installed within a limited space.

One aspect of the present invention is a power supplying plug locking device that prevents unauthorized removal of a power supplying plug from an inlet in a state in which an operation arm of the power supplying plug is engaged with a lock member of the inlet. The power supplying plug locking device includes a rotatable key cylinder and a link member that cooperates with the rotation of the key cylinder to switch the lock member between a lock state, which restricts movement of the lock member, and an unlock state, which permits movement of the lock member.

According to an aspect of the embodiments, a power supplying plug locking device that prevents unauthorized removal of a power supplying plug from an inlet in a state in which an operation arm of the power supplying plug is engaged with a lock member of the inlet is provided. The power supplying plug locking device includes a rotatable key cylinder; and an elongated link member including a basal portion and a distal portion, the basal portion being directly connected to and cantilever-supported by the key cylinder, the distal portion being arranged near the lock member, wherein the link member cooperates with the rotation of the key cylinder to switch the lock member between a lock state, which restricts movement of the lock member, and an unlock state, which permits movement of the lock member, wherein the key cylinder is separated from the lock member by a distance corresponding to the length of the link member.

Other aspects and advantages of the present invention will become apparent from the following description, taken in conjunction with the accompanying drawings, illustrating by way of example the principles of the invention.

The invention, together with objects and advantages thereof, may best be understood by reference to the following description of the presently preferred embodiments together with the accompanying drawings in which:
Fig. 1 is a block diagram showing a charge system and a power supplying plug locking device according to one embodiment of the present invention;
Fig. 2 is a perspective view showing a power supplying plug and a power receiving connector;
Fig. 3 is a perspective view showing an inlet coupled to an accommodation box by fasteners;
Fig. 4 is a schematic diagram showing connection of the power supplying plug to the power receiving connector;
Fig. 5 is an exploded perspective view showing the power supplying plug locking device;
Fig. 6 is a front view showing a power supplying port of the power receiving connector connected to the power supplying plug;
Fig. 7A is a side view showing components of the power supplying plug locking device;
Fig. 7B is a plan view showing a link member in a coupled state;
Fig. 8A is a front view showing the power supplying plug locking device in an unlock state;
Fig. 8B is a partially enlarged view of Fig. 8A;
Fig. 9A is a front view showing the power supplying plug locking device in a lock state;
Fig. 9B is a partially enlarged view of Fig. 9A;
Fig. 10 is a perspective view showing the power supplying plug locking device in an unlock state;
Fig. 11 is a perspective view showing the power supplying plug locking device in a lock state;
Fig. 12 is a schematic diagram showing the movement of a lock lever, which is forced upward by a lock arm that moves upward when fitting the power supplying plug to the power receiving connector; and
Fig. 13 is a schematic diagram showing the movement of a lock lever, which is forced upward by the lock arm that moves upward when removing the power supplying plug from the power receiving connector.

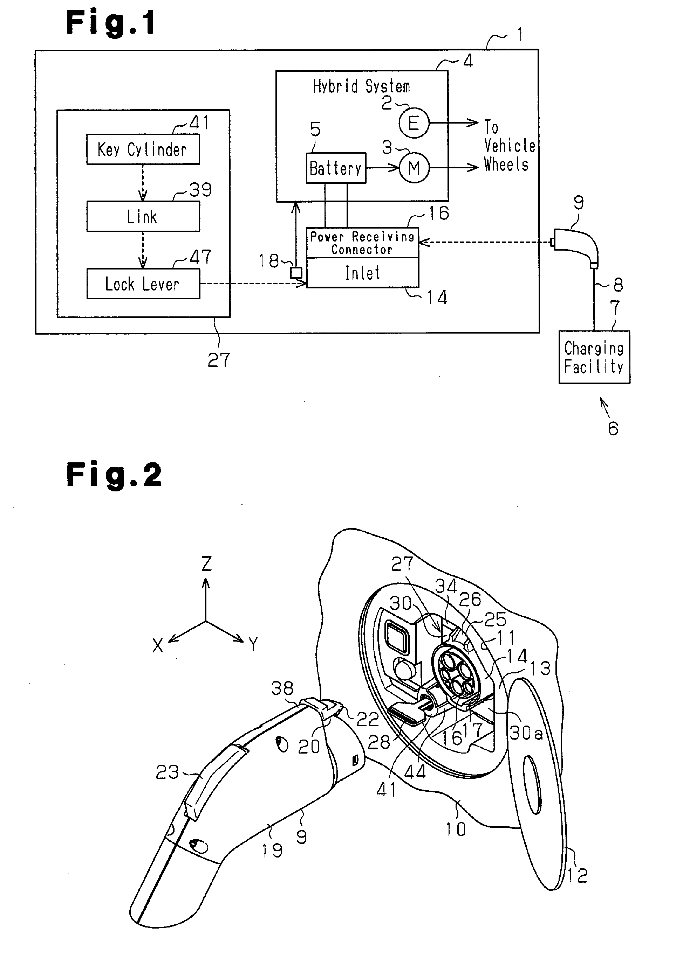

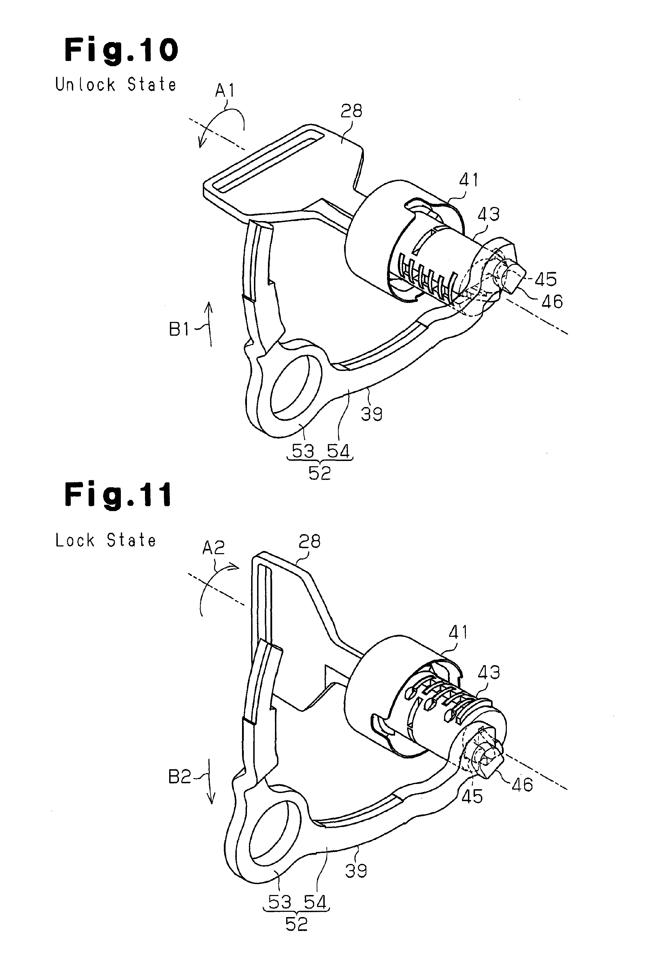

A power supplying plug locking device according to one embodiment of the present invention will now be described with reference to Figs. 1 to 13.

With reference to Fig. 1, a hybrid vehicle 1 includes a hybrid system 4 that uses an engine 2 and a motor 3 to generate power that rotates the vehicle wheels. The hybrid system 4 includes a battery 5 that serves as a power supply for the motor 3. The vehicle 1 also includes a charge system 6 that charges the battery 5 with an external power supply. The charge system 6 includes a charging facility 7, such as a charging station or a household commercial power supply, and a power supplying plug 9, which is arranged on a distal end of a charge cable 8 extending from the charging facility 7. The charge system 6 charges the battery 5 through the power supplying plug 9 that is connected to the vehicle 1.

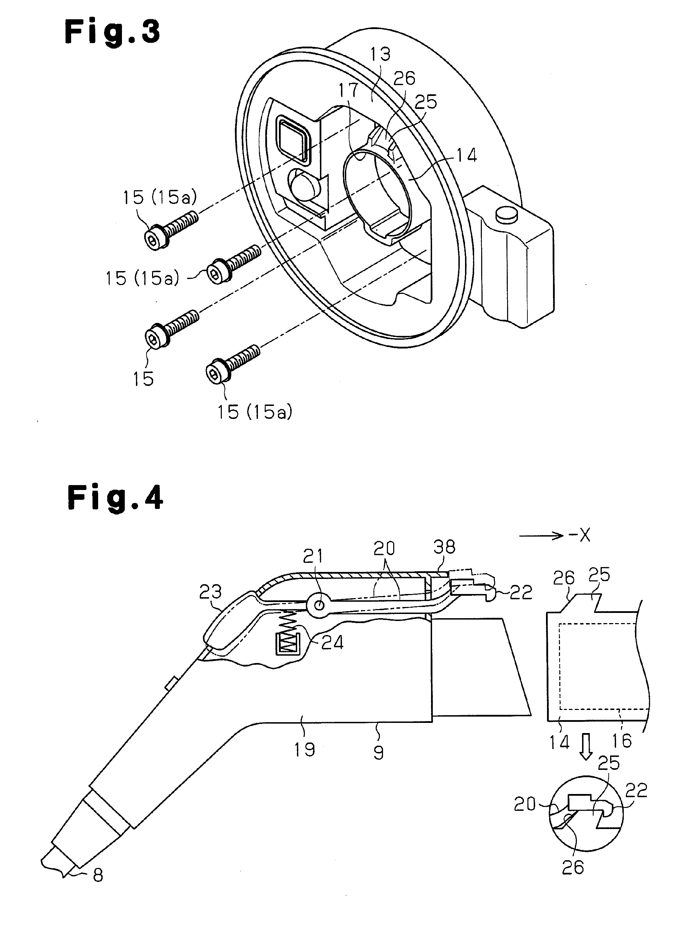

Figs. 2 and 3 shown an example in which a vehicle body 10 of the vehicle 1 includes a power supplying port 11, which is arranged in a side wall of the vehicle body 10. A lid 12 covers the power supplying port 11. The lid 12 can open and close the power supplying port 11. The power supplying port 11 includes an accommodation box 13. The lid 12 and various components coupled to the periphery of the power supplying port 11 are arranged in the accommodation box 13.

As shown in Fig. 3, a plurality of (four in the present example) fasteners 15 fix an inlet 14 to a generally central part of the accommodation box 13. A power receiving connector 16 arranged in the vehicle body 10 includes a plurality of electrical connection terminals (power terminal, connection terminals, and the like). A through hole 17 extends through a central part of the inlet 14, and the power receiving connector 16 extends out of the through hole 17. Referring to Fig. 1, the inlet 14 includes a plug connection detection sensor 18 that detects complete fitting of the power supplying plug 9 to the power receiving connector 16.

Referring to Fig. 4, the power supplying plug 9 is located at a power supply side of the charge system 6 and includes electrical connection terminals similar to those of the power receiving connector 16. The power supplying plug 9 includes a plug body 19. A pivotal lock arm 20 is coupled to the plug body 19 to prevent removal of the power supplying plug 9 from the power receiving connector 16. A pivot shaft 21 pivotally supports a longitudinally middle part of the lock arm 20. The lock arm 20 includes a distal hook 22 and a basal arm operation portion 23, which are exposed from the plug body 19. An urging member 24 is arranged near the arm operation portion 23 to constantly urge the lock arm 20 in a closing direction. The lock arm 20 corresponds to an operation arm.

To connect the power supplying plug 9 to the power receiving connector 16, the power supplying plug 9 is fitted straight into the power receiving connector 16 in the -X axis direction as viewed in Fig. 4. A catch 25 including a sloped surface 26 is formed on an upper portion of the inlet 14. As the hook 22 comes into contact with the catch 25, the sloped surface 26 guides the lock arm 20 thereby upwardly moving the lock arm 20. When the power supplying plug 9 is completely fitted to the inlet 14, the urging force of the urging member 24 closes the lock arm 20. This hooks the hook 22 to the catch 25 and prevents separation of the power supplying plug 9 from the inlet 14.

When the hybrid system 4 determines that the power supplying plug 9 has been completely fitted to the power receiving connector 16, the hybrid system 4 starts charging the battery 5 with the power supplying plug 9 (charging facility 7). When the hybrid system 4 determines that the battery 5 has been fully charged, the power supplying plug 9 ends the charging. To remove the power supplying plug 9 from the power receiving connector 16 after the charging ends, the arm operation portion 23 is pushed to open the lock arm 20, that is, release and separate the lock arm 20 from the catch 25. In this state, the power supplying plug 9 is pulled out straight from the power receiving connector 16 and removed from the vehicle 1.

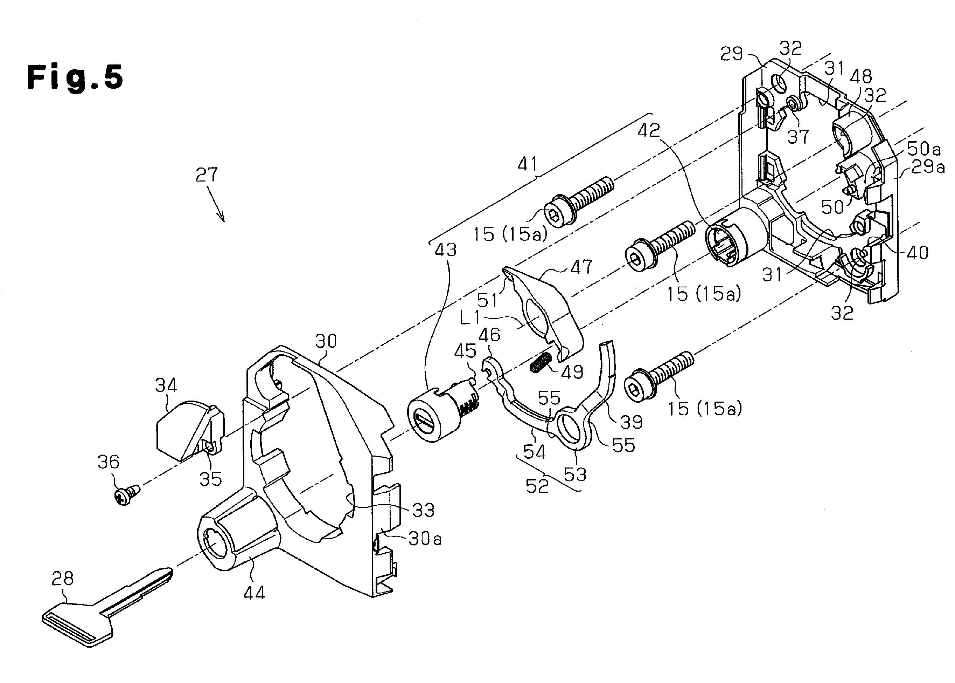

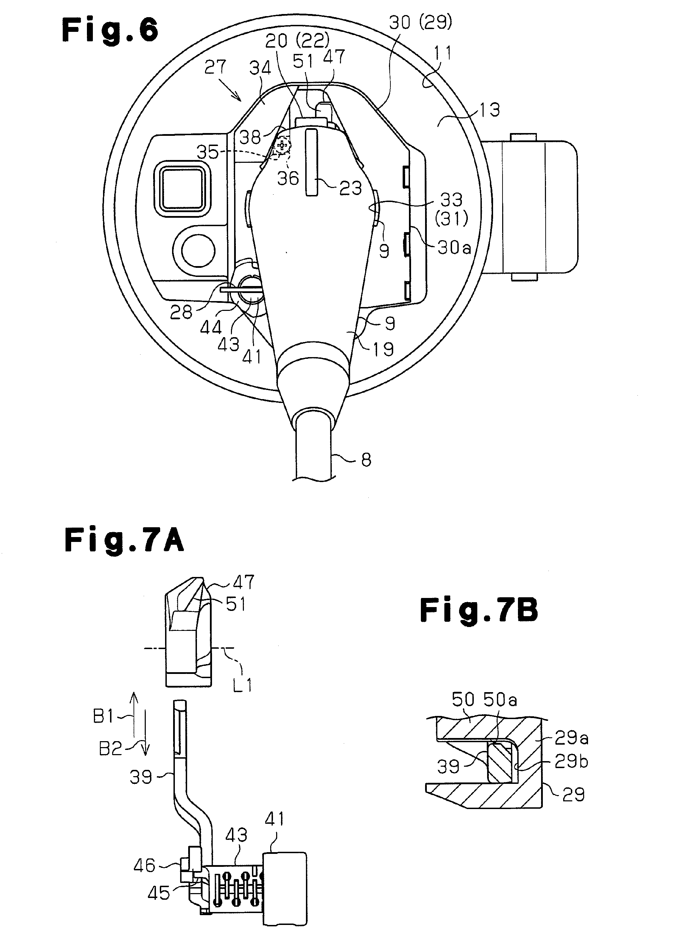

Referring to Figs. 5 and 6, the accommodation box 13 in the power supplying port 11 includes a power supplying plug locking device 27 that prevents unauthorized removal of the power supplying plug 9 from the power receiving connector 16. The power supplying plug locking device 27 of the present example uses a dedicated mechanical key 28 to perform a key operation that switches the locking device 27 between a lock state and an unlock state.

As shown in Fig. 5, the power supplying plug locking device 27 includes a device body 29 and a resin cover 30. Various components of a lock mechanism are coupled to the device body 29. The cover 30 covers an outer surface of the device body 29. The device body 29 includes a metal outer frame that accommodates various components. An opening 31 extends through the device body 29. The inlet 14 (power receiving connector 16) is arranged in the opening 31. Three fasteners 15a fasten and fix the device body 29, together with the inlet 14, to the accommodation box 13. The fasteners 15a, which are bolts or the like, are fastened to insertion holes 32 formed in three corners of the device body 29.

An opening 33 extends through the cover 30. The inlet 14 (power receiving connector 16) is also arranged in the opening 33. The cover 30 functions as a lid of the device body 29 and conceals the three fasteners 15a, which are fastened to the device body 29. The cover 30 is snapped onto and fixed to the device body 29 by a snap-fit structure.

The power supplying plug locking device 27 of the present example may be provided as an add-on part. In this case, among the four fasteners 15 that fix the inlet 14 to the accommodation box 13, the three fasteners 15a are removed from the inlet 14. Then, the device body 29 is positioned relative to the inlet 14. In this state, the fasteners 15a fasten and couple the device body 29 to the inlet 14. Then, the cover 30 is coupled onto and fixed to the cover by the snap-fit structure.

As shown in Figs. 5 and 6, a cap 34 is coupled, in a removable manner, to the device body 29. The cap 34 conceals a lid lock pin (not shown) that locks the lid 12 when the lid 12 is in a closed state. The cover 30 includes a cover body 30a in addition to the cap 34. The cap 34 includes a seat 35, which is located at a level that is lower than its surrounding. A fastener 36 is extended through the seat 35 and fastened to a boss 37 of the device body 29 to fix the cap 34 to the device body 29.

Referring to Fig. 6, in the present example, a shield 38 extends from a distal end of the power supplying plug 9. When the power supplying plug 9 is connected to the power receiving connector 16, the shield 38 conceals the seat 35, which is located at a level that is lower than its surrounding. Thus, the fastener 36 cannot be viewed from the exterior. Since the power supplying plug 9 hides the fastener 36 when the power supplying plug 9 is connected to the power receiving connector 16, unauthorized removal of the fastener (i.e., cap 34) is prevented.

As shown in Figs. 5 and 7 to 9, a generally arcuate (semi-circular) link member 39 is coupled, in a movable manner, to the device body 29 along the periphery of the opening 31. A generally arcuate guide groove 40 is formed in a side portion of the device body 29 to receive and guide the link member 39. The link member 39 switches the power supplying plug locking device 27 between a lock state and an unlock state in accordance with its position.

Further, the device body 29 includes a key cylinder 41 actuated to move the arcuate link member 39. The key cylinder 41 includes a cylindrical rotor case 42, which is formed integrally with one corner of the device body 29, and a rotor 43, which is accommodated in the rotor case 42. A rotor cap 44 is formed in the cover 30 to prevent separation of the rotor 43 from the rotor case 42.

The dedicated mechanical key 28 of the power supplying plug locking device 27 can be inserted into the key cylinder 41 (rotor 43). The dedicated mechanical key 28 differs from a mechanical key used in a key system that locks and unlocks the vehicle doors and starts and stops the engine. The dedicated mechanical key 28 is used exclusively for the power supplying plug locking device 27. Insertion of the correct mechanical key 28 into the key cylinder 41 aligns a plurality of tumblers (not shown) and allows for rotation of the rotor 43.

As shown in Figs. 5, 10, and 11, a cylindrical engagement projection 45 projects from a rear surface of the rotor 43 toward the link member 39. The engagement projection 45 is movably engaged with an elongated hole 46 formed in a basal portion of the link member 39. When the mechanical key 28 rotates the rotor 43, the engagement projection 45 of the rotor 43 and the elongated hole 46 of the link member 39 converts the rotation of the rotor 43 to arcuate movement of the link member 39. In the illustrated example, the engagement projection 45 and the elongated hole 46 directly connect the link member 39 to the rotor 43. The engagement projection 45 of the rotor 43 and the elongated hole 46 of the link member 39 form one example of a coupling portion or a joint. The elongated hole 46 may be referred to as a basal portion of the link member 39.

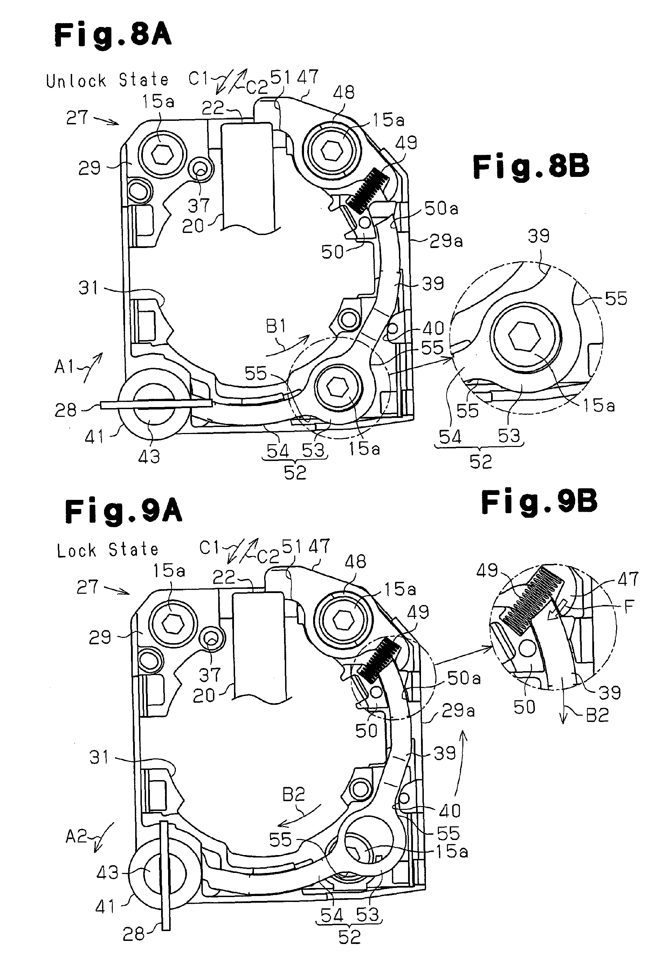

In the present example, when the key cylinder 41 is rotated in the clockwise direction, as indicated by arrow A1 in Fig. 8, the link member 39 moves along an arcuate path in the counterclockwise direction, as indicated by arrow B1 in Fig. 8. When the key cylinder 41 is rotated in the counterclockwise direction, as indicated by arrow A2 in Fig. 9, the link member 39 moves along an arcuate path in the clockwise direction, as indicated by arrow B2 in Fig. 9. The mechanical key 28 can be removed from and inserted into the key cylinder 41 regardless of whether the key cylinder 41 is located at a lock position or an unlock position. Rotation in the directions of arrows A1 and B1 may be referred to as rotation in the lock direction. Rotation in the directions of arrows A2 and B2 may be referred to as rotation in the unlock direction.

Referring to Figs. 5 and 7 to 9, an upper portion of the device body 29 supports a lock lever 47, which is pivotal about an axis L1 extending into the device body 29. The lock lever 47 restricts movement of the lock arm 20 in an opening direction. Further, the lock lever 47 is pivotally coupled to a cylindrical shaft support 48. An insertion hole 32 extends through the shaft support 48 to receive one of the fasteners 15a. An urging member 49 is arranged at a basal portion of the lock lever 47 to constantly urge the lock lever 47 in a closing direction, which is the direction of arrow C1 in Figs. 8 and 9. The urging member 49 may be, for example, a coil spring, and includes one end hooked to a hole in the basal portion of the lock lever 47 and another end hooked to a hole in a support projection 50, which projects from a main portion 29a of the device body 29. The lock lever 47 corresponds to a lock member (lever).

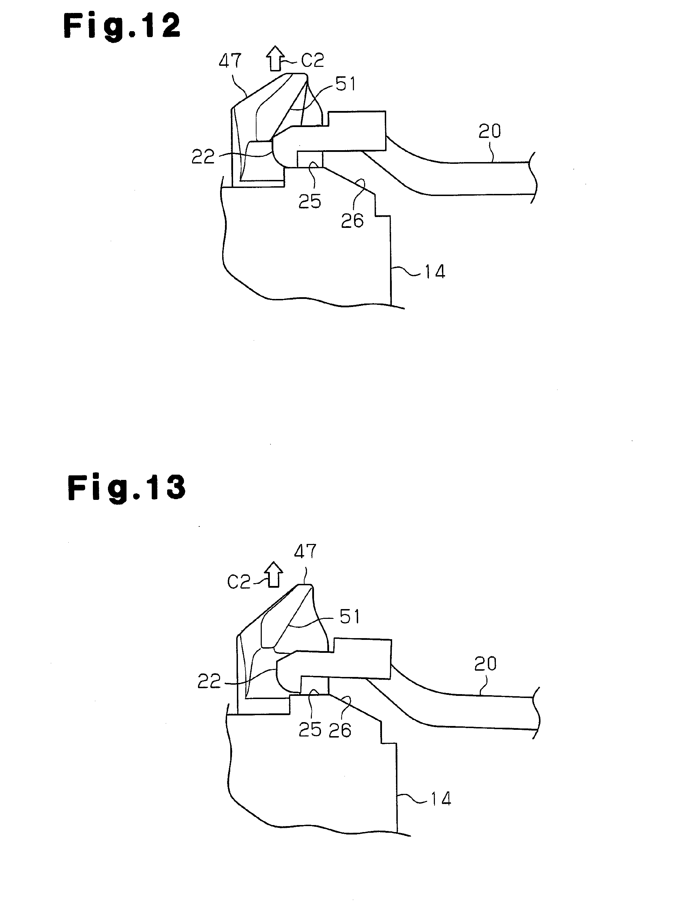

The lock lever 47 includes a distal portion that defines a sloped surface 51. When the power supplying plug 9 is fitted to the power receiving connector 16, the lock arm 20 comes into contact with the sloped surface 51 and pivots the lock lever 47 in an opening direction, which is indicated by arrow C2 in Figs. 8 and 9. In this manner, referring to Fig. 12, when connecting the power supplying plug 9, contact of the lock arm 20 with the sloped surface 51 applies force that pivots the lock lever 47 in the opening direction, which is indicated by arrow C2 in Figs. 8 and 9. Referring to Fig. 13, when the lock arm 20 falls off the catch 25 and stops pushing the sloped surface 51, the urging force of the urging member 49 pivots the lock lever 47 in a closing direction, which is the direction of arrow C1 in Figs. 8 and 9.

When the key cylinder 41 undergoes a lock operation, the link member 39 moves along an arcuate path in the lock direction, as indicated by arrow B1 in Fig. 8. When the link member 39 reaches a location where it supports the lock lever 47 from below, the lock lever 47 is in a lock state in which movement of the lock lever 47 in the opening direction is restricted. When the key cylinder 41 undergoes an unlock operation, the link member 39 moves along an arcuate path in the unlock direction, as indicated by arrow B2 in Fig. 9. When the link member 39 moves away from the lock lever 47, the lock lever 47 is in an unlock state in which movement of the lock lever 47 in the opening direction is permitted.

In the present example, the support projection 50 cooperates with the lock lever 47 to sandwich the distal portion of the link member 39 in the lock state. For example, someone may attempt to forcibly open and release the lock arm 20 from the catch 25. However, the support projection 50 supports the lock lever 47 with the distal portion of the link member 39. In this manner, the link member 39 prevents unauthorized movement of the lock lever 47. In the preferred example, the support projection 50 includes a relatively wide surface 50a that securely supports the lock lever 47.

As shown in Fig. 7A, the link member 39 is bent to include a step at its middle part. As shown in Fig. 7B, the bent shape allows the link member 39 to be supported on a wall of the device body 29 at a wall surface 29b of the main portion 29a and the surface 50a of the support projection. This supports the link member 39 over a wide area and effectively prevents deformation of the link member 39.

As shown in Figs. 5 and 8 to 11, the link member 39 includes a fastener shield 52. The fastener shield 52 conceals the lower right fastener 15a as viewed from the front only when the link member 39 is in the lock state. The fastener shield 52 of the present example includes a generally arcuate non-interference portion 53, which exposes the fastener 15a, and an interference portion 54, which conceals the fastener 15a from above. As shown in Fig. 8, opposite sides of the non-interference portion 53 are thickened and gradually curved to form reinforced portions 55 that obtain the required strength. In the illustrated example, the fastener shield 52 includes a window that allows access to the fastener 15a, which is a bolt or the like.

As shown in Fig. 8, when the link member 39 is in an unlock state, the non-interference portion 53 is aligned with the fastener 15a. This exposes the fastener 15a. Thus, when the link member 39 is in the unlock state, removal of the fastener 15a (power supplying plug locking device 27) is permitted. As shown in Fig. 9, when the link member 39 is in a lock state, the interference portion 54 is located above the fastener 15a thereby concealing the fastener 15a. Thus, when the link member 39 is in the lock state, removal of the fastener 15a (power supplying plug locking device 27) is prohibited.

The operation of the power supplying plug locking device 27 will now be described with reference to Figs. 8 to 13.

Referring to Fig. 12, when connecting the power supplying plug 9 to the power receiving connector 16, the hook 22 of the lock arm 20 comes into contact with the sloped surface 51 of the lock lever 47 and forces the lock lever 47 upward. This pivots the lock lever 47 in the opening direction, which is indicated by arrow C2 in Fig. 12. Thus, the power supplying plug 9 can be further fitted into the power receiving connector 16 without being interfered by the lock lever 47.

When the power supplying plug 9 is completely fitted to the power receiving connector 16 and the lock arm 20 moves over the catch 25, the urging force of the urging member 24 pivots the lock arm 20 in the closing direction, which is indicated by arrow C1 in Fig. 8. Thus, the lock arm 20 falls off the catch 25. This hooks the hook 22 of the lock arm 20 to the catch 25 and completes the fitting of the power supplying plug 9.

Referring to Fig. 8, when locking the power supplying plug 9 to the power receiving connector 16, the mechanical key 28 is inserted into the key cylinder 41, which is located at the unlock position. The mechanical key 28 is rotated by generally ninety degrees in the lock direction, which is indicated by arrow A1 in Fig. 8 and directed toward the right of the drawing. As the rotor 43 rotates in the lock direction, the engagement projection 45 moves along the elongated hole 46 and pushes the link member 39 along an arcuate path in the lock direction, which is indicated by arrow B1 in Fig. 8.

Referring to Fig. 9, when the distal end of the link member 39 enters the gap between the lock lever 47 and the support projection 50, the link member 39 restricts movement of the lock lever 47 in the opening direction, which is indicated by arrow C2 in Fig. 9. This shifts the power supplying plug locking device 27 to a lock state. In this manner, the user moves the link member 39 along the arcuate path to shift to the lock state and then removes the mechanical key 28 from the key cylinder 41. This completes the locking.

When the power supplying plug locking device 27 is in the lock state, someone may attempt to move the lock arm 20 in an opening direction to remove the power supplying plug 9 from the power receiving connector 16 in an unauthorized manner. However, when the power supplying plug locking device 27 is in the lock state, the link member 39 prohibits movement of the lock lever 47 in the opening direction. Thus, the lock arm 20 cannot be disengaged from the lock lever 47, and unauthorized removal of the power supplying plug 9 from the power receiving connector 16 is hindered.

Referring to Fig. 9B, in the lock state, the link member 39 is supported by a wide area of the support projection 50 thereby restricting movement of the lock lever 47 in the opening direction. Thus, the link member 39 securely supports the lock lever 47 and effectively prevents unauthorized movement of the lock lever 47. When unauthorized unlocking is attempted, an operating load applied by the lock lever 47 to the link member 39 acts in an operation load direction F that intersects with the unlock direction of the link member 39, which is indicated by arrow B2 in Fig. 9. Thus, the operation load does not act to unlock the link member 39. This effectively prevents unauthorized unlocking.

To remove the power supplying plug 9 from the power receiving connector 16 after the charging of the battery 5 is completed, the power supplying plug locking device 27 is switched to the unlock state. In this case, referring to Fig. 9, the mechanical key 28 is inserted into the key cylinder 41, which is located at the lock position, and rotated by generally ninety degrees in the unlock direction, which is indicated by arrow A2 in Fig. 9 and directed toward the left of the drawing. As the rotor 43 rotates in the unlock direction, the engagement projection 45 moves along the elongated hole 46 and pulls the link member 39 along an arcuate path in the unlock direction, which is indicated by arrow B2 in Fig. 9.

Referring to Fig. 8, when the link member 39 is separated from the gap between the lock lever 47 and the support projection 50, the link member 39 permits movement of the lock lever 47 in the opening direction, which is indicated by arrow C2 in Fig. 9. Thus, the power supplying plug locking device is shifted to an unlock state.

Referring to Fig. 13, after shifting to the unlock state, to remove the power supplying plug 9 from the power receiving connector 16, the arm operation portion 23 is pushed to move the lock arm 20 in the opening direction. As the lock arm 20 moves in the opening direction, the hook 22 pushes the sloped surface 51 and lifts the lock lever 47 in the opening direction, which is indicated by arrow C2 in Fig. 13. This allows for removal of the power supplying plug 9 from the power receiving connector 16. When the power supplying plug 9 is removed from the power receiving connector 16, the urging force of the urging member 49 returns the lifted lock lever 47 to its original state.

As described above, in the present example, the rotation of the key cylinder 41 switches the link member 39, which is movable along an arcuate path, between a lock position and an unlock position. This restricts and permits movement of the lock lever 47 in the opening direction and locks and unlocks the power supplying plug 9. Thus, in the present example, the lock lever 47, the link member 39, and the key cylinder 41 are arranged in a semi-circular space around the inlet 14.

The lock lever 47, the link member 39, and the key cylinder 41 are dispersed and arranged in the vacant space around the inlet 14. Accordingly, the power supplying plug locking device 27, which is manually operated, is easily installed in the space around the inlet 14.

The power supplying plug locking device 27 is switched to a lock state or unlock state by manually rotating the key cylinder 41 with the mechanical key 28. Accordingly, the power supplying plug locking device 27 is operated only when switched to the lock state or the unlock state by the user. This eliminates unnecessary locking and unlocking operations and suppresses early component wear.

Further, when the link member 39 is in the lock state, the interference portion 54 of the fastener shield 52 covers and conceals a single fastener 15a from above. Thus, when the power supplying plug locking device 27 locks the power supplying plug 9, the fastener 15a cannot be removed since the link member 39 conceals at least part of the fastener 15a even if someone breaks the cover 30 to remove the power supplying plug locking device 27 from the vehicle body 10 in an unauthorized manner. This effectively prevents unauthorized removal of the power supplying plug locking device 27 (power supplying plug 9).

The present embodiment has the advantages described below.
(1) The key cylinder 41 is manually operated to move the arcuate link member 39 along the arcuate path and switch the power supplying plug locking device 27 between a lock state and an unlock state. In this manner, the link member 39 is arranged between the lock lever 47 and the key cylinder 41. Thus, the components of the power supplying plug locking device 27 do not have to be concentrated at one location proximal to the lock lever 47 and can be dispersed around the inlet 14. This facilitates the arrangement of the power supplying plug locking device 27 in a limited space.
(2) The main components of the power supplying plug locking device 27 are the link member 39, the key cylinder 41, and the lock lever 47. Thus, the power supplying plug locking device 27 has a simple structure, and the cost of the components is low.
(3) The link member 39 is an arcuate component that extends along the outer surface of the inlet 14. Thus, the wide space around the inlet 14 can be used to lay out the link member 39. This ensures that the link member 39 has a sufficient length, while suppressing enlargement of the power supplying plug locking device 27.
(4) When fitting the power supplying plug 9 to the power receiving connector 16, the lock arm 20 of the power supplying plug 9 lifts the sloped surface 51 of the lock lever 47. This pivots the lock lever 47 in the opening direction and permits fitting of the power supplying plug 9 to the power receiving connector 16. When the lock arm 20 is operated in the opening direction to remove the power supplying plug 9 from the power receiving connector 16, the lock lever 47 is lifted. This pivots the lock lever 47 in the opening direction and permits removal of the power supplying plug 9 from the power receiving connector 16. Thus, the power supplying plug 9 has a simple locking and unlocking structure implemented when fitting and removing the power supplying plug 9 to and from the inlet 14.
(5) The mechanical key 28 can be removed from the key cylinder 41 regardless of whether the key cylinder 41 is located at the lock position or the unlock position.
(6) When the link member 39 is located at the lock position, the support projection 50 supports the rear surface of the distal portion of the link member 39 over a wide area. Thus, even when someone attempts to operate the lock arm 20 in the opening direction, the load applied to the link member 39 through the lock lever 47 from the lock arm 20 is received by the support projection 50. In this manner, the lock lever 47 is held at the lock position. This effectively prevents unauthorized removal of the power supplying plug 9.
(7) When the power supplying plug locking device 27 is in a lock state, the lock lever 47 and the support projection 50 sandwich the link member 39. Thus, when unauthorized unlocking is attempted, the load applied by the lock lever 47 to the link member 39 acts in the operation load direction F, which is indicated in Fig. 9. The operation load direction F intersects with the unlock direction of the link member 39, which is indicated by arrow B2 in Fig. 9. Since force for moving the link member 39 in the unlock direction is not transmitted to the link member 39 during unauthorized removal, the effect for preventing unauthorized removal of the power supplying plug 9 is improved.
(8) When the link member 39 moves to the lock position along an arcuate path, the interference portion 54 of the link member 39 conceals the fastener 15a. Thus, the fastener 15a cannot be removed in an unauthorized manner. This effectively prevents unauthorized removal of the power supplying plug locking device 27.
(9) The cover 30 conceals the fasteners 15a. This lowers the possibility of the fasteners 15a being removed in an unauthorized manner. Thus, the effect for preventing unauthorized removal of the power supplying plug locking device 27 is improved. Further, the fasteners 15a are not exposed to the exterior. This improves the appearance of the power supplying plug locking device 27.
(10) When the power supplying plug 9 is connected to the inlet 14, the power supplying plug 9 conceals the fastener 36. This hinders unauthorized removal of the cap 34.
(11) The mechanical key 28 is dedicated to the power supplying plug locking device 27.
   Thus, even when the key cylinder 41 is stolen and the key groove shape is obtained from the tumblers, the groove shape of the key used to lock and unlock the vehicle doors and start the engine is not obtained. This ensures security against vehicle theft.
(12) The cap 34 conceals the lid lock pin (not shown). Thus, the lid lock pin is not exposed to the exterior. This further improves the appearance of the power supplying plug locking device 27. Further, even when the lid lock pin is an add-on, the cap 34 may be removed to add the lid lock pin. Thus, a lid lock pin can be added as desired by a user.

It should be apparent to those skilled in the art that the present invention may be embodied in many other specific forms without departing from the scope of the invention. Particularly, it should be understood that the present invention may be embodied in the following forms.

The engagement projection 45 is formed on the rotor 43, and the elongated hole 46 is formed in the link member 39. Instead, the engagement projection 45 may be arranged on the link member 39, and the elongated hole 46 may be arranged in the rotor 43.

The coupling portion that coverts rotation of the key cylinder 41 to movement of the link member 39 along an arcuate path does not have to be formed by the engagement projection 45 of the rotor 43 and the elongated hole 46 of the link member 39. For example, a projection arranged on a side surface of the rotor 43 may push a basal portion of the link member 39 to move the link member 39 in the lock direction. An urging member may urge the link member 39 in the unlock direction.

A structure that maintains a lock state may be employed in which the link member 39 is hooked to a groove in the lock lever 47 when the link member 39 is located at the lock position.

The fastener shield 52 is generally arcuate so that the non-interference portion 53 exposes the fastener 15a in the unlock state. Instead, the interference portion 54 may be shaped to conceal the fastener 15a even in the lock state.

The cover 30 is coupled to the device body 29 by a snap-fit structure. Instead, for example, screws or the like may be used to couple the cover 30 to the device body 29.

The link member 39 has a semi-circular shape. Instead, the link member 39 may have a straight shape or another shape.

The mechanical key 28 can be inserted into and removed from the key cylinder 41 at both lock and unlock positions. Instead, insertion and removal of the mechanical key 28 may be allowed only when the key cylinder 41 is located at the lock position as long as the key cylinder 41 can be held at the lock position.

The mechanical key 28 does not have to be dedicated for the power supplying plug locking device 27 and may be a common key shared by the key system used to lock and unlock the vehicle doors and start the engine.

The shape, location, and movement of the lock arm 20 is not limited to the foregoing description and may be modified as long as the hook 22 can be hooked to the catch 25 of the inlet 14.

The lock lever 47 does not have to be pivotal about the axis L1, which extends into the device body 29, and may be pivotal about an axis that extends in the widthwise direction or heightwise direction of the device body 29.

The lock member is not limited to a lever (lock lever 47) lifted by the lock arm 20 when the power supplying plug 9 is fitted to and removed from the power receiving connector 16. For example, the lock member may be a member switched between by the link member 39 between the lock position and the unlock position. In this case, when the lock member is located above the lock arm 20 at the lock position, the lock member restricts movement of the lock arm 20 in the opening direction. When the lock member is separated from the lock arm 20 and located at the unlock position, the lock member permits movement of the lock arm 20 in the opening direction.

The power supplying plug locking device 27 is fastened together with the inlet 14 by the fasteners 15 to the vehicle body 10. Instead, just the power supplying plug locking device 27 may be coupled by a bolt or the like to the vehicle body 10.

The urging member 49 is not limited to a spring and may be replaced by another component as long as a biasing force can be applied to the lock lever 47 in a closing direction.

The structure of the power supplying plug locking device 27 is not limited to the foregoing description and may be modified as long as the concept of the present invention is satisfied.

The vehicle 1 is not limited to a hybrid vehicle and may be an electric vehicle powered by only the motor 3.

The power supplying plug locking device 27 is installed in the vehicle 1. However, the power supplying plug locking device 27 may be used for other apparatuses or devices.

The present examples and embodiments are to be considered as illustrative and not restrictive, and the invention is not to be limited to the details given herein, but may be modified within the scope and equivalence of the appended claims.

A power supplying plug locking device (27) prevents unauthorized removal of a power supplying plug (9) from an inlet (14) in a state in which an operation arm (20) of the power supplying plug is engaged with a lock member (47) of the inlet. The power supplying plug locking device includes a rotatable key cylinder (41) and a link member (39) that cooperates with the rotation of the key cylinder to switch the lock member between a lock state, which restricts movement of the lock member, and an unlock state, which permits movement of the lock member.

## Claims

1. A power supplying plug locking device (27) that prevents unauthorized removal of a power supplying plug (9) from an inlet (14) in a state in which an operation arm (20) of the power supplying plug is engaged with a lock member (47) of the inlet, the power supplying plug locking device comprising:
a rotatable key cylinder (41); and
a link member (39) that cooperates with the rotation of the key cylinder to switch the lock member between a lock state, which restricts movement of the lock member, and an unlock state, which permits movement of the lock member.

2. The power supplying plug locking device according to claim 1, wherein the link member is an arcuate member extending along an outer surface of the inlet.

3. The power supplying plug locking device according to claim 1, wherein
the lock member is a pivotal lever, and
when the link member is in the unlock state and the operation arm forces the lever upward, the lever rotates in an opening direction and permits fitting of the power supplying plug to the inlet and removal of the power supplying plug from the inlet.

4. The power supplying plug locking device according to claim 1, wherein
the key cylinder can be rotated by a mechanical key (28) to an unlock position and a lock position,
when the key cylinder is rotated to the unlock position, the key cylinder pulls the link member and shifts the link member to an unlock state,
when the key cylinder is rotated to the lock position, the key cylinder pushes the link member and shifts the link member to a lock state, and
the mechanical key can be inserted into and removed from the key cylinder regardless of whether the key cylinder is located at either one of the lock position and the unlock position.

5. The power supplying plug locking device according to claim 1, further comprising a device body (29) including a support projection (50), wherein the support projection sandwiches the link member with the lock member when the link member is located at the lock position.

6. The power supplying plug locking device according to claim 1, further comprising a device body (29) fixed by a fastener (15; 15A; 36), wherein the link member has a shape that conceals at least part of the fastener when the link member is in the lock state.

7. The power supplying plug locking device according to claim 1, wherein the key cylinder is separated from the lock member by a distance corresponding to the length of the link member.

8. The power supplying plug locking device according to claim 7, wherein
the link member is directly connected to the key cylinder, and
the link member includes a cantilever-supported basal portion (46).

9. The power supplying plug locking device according to claim 1, wherein
the link member is an arcuate member including a basal portion (46), which is directly connected to the key cylinder, and an opposite distal portion,
the distal portion of the link member contacts the lock member when the key cylinder is rotated to the lock position, and
the distal portion of the link member is separated from the lock member when the key cylinder is rotated to the unlock position.

10. The power supplying plug locking device according to claim 9, wherein
the link member includes a middle portion located between the basal portion and the distal portion,
the middle portion of the link member includes a window,
the middle portion of the link member prohibits access to a bolt (15a) when the link member is in the lock state, and
the window permits access to the bolt when the link member is in the unlock state.
